# EUROPÄISCHE PATENTSCHRIFT

(11) **EP 1 325 888 B1**
(45) Veröffentlichungstag und Bekanntmachung des Hinweises auf die Patenterteilung: **05.04.2006**
(21) Anmeldenummer: 02406105.3
(22) Anmeldetag: 01.01.2003
(51) Int. Cl.: C02F 1/46

(54) **Vorrichtung zur Dotierung von Wasser mit Silberionen**
Apparatus for doping water with silver ions
Appareil pour le dopage de l'eau avec des ions argent

(30) Priorität: 04.01.2002 CH 92002
(43) Veröffentlichungstag der Anmeldung: 09.07.2003
(73) Patentinhaber: Axair AG, 8808 Pfäffikon SZ (CH)
(72) Erfinder: Wulz, Helmut, 8903 Birmensdorf (CH)
(74) Vertreter: Bollhalder, Renato

(56) Entgegenhaltungen:
- WO-A-90/05799
- CH-A- 662 804
- US-A- 3 547 801
- US-A- 5 753 100

## Beschreibung

Die vorliegende Erfindung bezieht sich auf eine Vorrichtung zur Dotierung von Wasser mit Silberionen, wie sie im Oberbegriff des unabhängigen Patentanspruchs 1 definiert ist.

Derartige Vorrichtungen werden dazu verwendet, Wasser mit Silberionen zu versehen. Es ist schon seit einiger Zeit bekannt, dass Silberionen in Wasser eine antimikrobielle Wirkung haben. Falls die Konzentration der Silberionen im Wasser 0,1 mg/l oder mehr beträgt, ist das Wasser im Allgemeinen keimfrei. Um Wasser zu entkeimen, hat man daher auf verschiedene Arten versucht, dem Wasser Silberionen beizufügen. Beispielsweise hat man im Wasser Silberblöcke angeordnet und an diese eine elektrische Spannung angelegt, so dass durch Elektrolyse Silberionen aus den Silberblöcken gelöst werden und ins Wasser gelangen.

Um die wirksame Oberfläche des Silbers zu erhöhen und den Wirkungsgrad der Elektrolyse zu verbessern, hat die Anmelderin bei einer bisherigen Vorrichtung zur Dotierung von Wasser mit Silberionen ein Innenrohr aus Edelstahl so in einem Aussenrohr aus Edelstahl angeordnet, dass zwischen Innenrohr und Aussenrohr ein Ringspalt vorhanden ist. Bei dieser Vorrichtung sind das Aussenrohr auf der dem Ringspalt zugewandten Innenseite und das Innenrohr auf der dem Ringspalt zugewandten Aussenseite jeweils mit einer Silberschicht versehen, die durch Galvanisierung auf den Edelstahl aufgebracht worden ist. Die beiden Silberschichten sind durch ebenfalls versilberte Kontaktstücke an eine steuerbare elektrische Stromquelle angeschlossen.

Mit einer solchen Vorrichtung zur Dotierung von Wasser mit Silberionen können durch Elektrolyse Silberionen aus den Silberschichten in durch den Ringspalt strömendes Wasser abgeschieden werden. Sie hat sich für entsalztes Wasser mit einer elektrischen Leitfähigkeit von mindestens 5 µS, wie es beispielsweise in Lufbefeuchtungseinrichtungen verwendet wird, bewährt. Für Wasser mit einer kleineren Leitfähigkeit hat sich die Silberionenabscheidung aber als zu gering erwiesen, was damit zusammenhängt, dass bei den gegebenen Elektrodenflächen und dem gegebenen Elektrodenabstand die notwendige Feldstärke nicht aufgebaut werden kann. Die Silberschichten konnten maximal 80 µm dick gemacht werden, da es bei grösseren Dicken zu Abblätterungen kommt. Ein weiterer Nachteil der dünnen Silberschichten besteht darin, dass ihre Gebrauchsdauer zu kurz ist und sie nach der Abscheidung von Silberionen relativ rasch nicht mehr 100% dicht sind, so dass der darunterliegende Edelstahl mit Wasser in Kontakt kommt und mit diesem reagieren kann, was zu einer Materialabscheidung und Verfärbung des Wassers führen kann.

Angesichts der Nachteile der bisher bekannten, oben beschriebenen Vorrichtungen zur Dotierung von Wasser mit Silberionen liegt der Erfindung die folgende Aufgabe zugrunde. Zu schaffen ist eine Vorrichtung zur Dotierung von Wasser mit Silberionen der eingangs erwähnten Art, mit der über eine längere Zeit problemlos Silberionen in Wasser abscheidbar sind, wobei eine Konzentration der Silberionen im Wasser von 0,1 mg/l erreichbar sein soll und die Silberionenabscheidung vorzugsweise auch bei entsalztem Wasser mit einer elektrischen Leitfähigkeit von kleiner als 5 µS funktioniert.

Diese Aufgabe wird durch die erfindungsgemässe Vorrichtung zur Dotierung von Wasser mit Silberionen gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Vorrichtung zur Dotierung von Wasser mit Silberionen umfasst ein Aussenrohr und ein Innenrohr, das so innerhalb des Aussenrohrs angeordnet ist, dass zwischen Innenrohr und Aussenrohr ein Ringspalt vorhanden ist. Auf der dem Ringspalt zugewandten Innenseite des Aussenrohrs und auf der dem Ringspalt zugewandten Aussenseite des Innenrohrs ist jeweils eine silberhaltige Schicht angeordnet. Erfindungsgemäss bestehen die beiden silberhaltigen Schichten jeweils aus einer Folie, die auf die Innenseite des Aussenrohrs bzw. die Aussenseite des Innenrohrs befestigt ist. Die Vorrichtung umfasst ausserdem Anschlussmittel zum Anschliessen der beiden silberhaltigen Schichten an eine elektrische Stromquelle.

Die Spannung an den beiden durch die Folien gebildeten Elektroden beträgt zwischen 0,5 V und maximal 50 V, wobei es sich um eine Gleichspannung handelt, deren Polarität an den beiden Elektroden zyklisch gewechselt wird. Die Zykluszeit kann bis zu 4 Wochen betragen, ist aber vorzugsweise etwa 1 Minute. Dadurch wird ein gleichmässiges Abtragen von Silber an den beiden Elektroden bewirkt.

Dadurch, dass die beiden silberhaltigen Schichten jeweils aus einer Folie bestehen, die auf die Innenseite des Aussenrohrs bzw. die Aussenseite des Innenrohrs befestigt ist, können sie dicker ausgebildet werden, was den Vorteil hat, dass eine einwandfreie Funktion der Vorrichtung über einen langen Zeitraum gewährleistet werden kann. Die dickeren silberhaltigen Folien ermöglichen über eine lange Betriebsdauer eine ausreichend grosse Silberionenabscheidung auch in entsalztes Wasser mit einer elektrischen Leitfähigkeit kleiner als 5 µS, insbesondere in Wasser mit einer elektrischen Leitfähigkeit im Bereich von 0,5 µS bis 15 µS, welches zur Luftbefeuchtung verwendet wird. Schliesslich müssen das Aussenrohr und das Innenrohr nicht unbedingt aus einem Material bestehen, das sich zur Galvanisierung eignet, sondern können auch aus einem insbesondere kostengünstigeren und/oder leichteren Material bestehen, wie z.B. Kunststoff, Keramik oder einem anderen Nichtleiter, das auch bei Vorhandensein von Undichtheiten in den silberhaltigen Schichten keine unerwünschten Ionen abscheidet.

Vorzugsweise umfasst die Vorrichtung zur Dotierung von Wasser mit Silberionen einen Boden, der das Aussenrohr und das Innenrohr an dem einen ihrer Rohrenden abschliesst, sowie einen Deckel, der das Aussenrohr und das Innenrohr an dem anderen ihrer Rohrenden abschliesst, wobei im Deckel und/oder im Boden ein Wassereinlass und ein Wasserauslass angeordnet sind, so dass Wasser über den Wassereinlass in den Ringspalt einführbar und über den Wasserauslass wieder aus dem Ringspalt abführbar ist. Durch den Abschluss des Aussenrohrs und des Innenrohrs mit einem Boden und einem Deckel kann das Wasser in der Vorrichtung zur Dotierung von Wasser mit Silberionen in einem bis auf den Wassereinlass und den Wasserauslass geschlossenen System geführt werden.

Mit Vorteil sind der Wassereinlass und der Wasserauslass bezogen auf den Ringspalt um 180° zueinander versetzt angeordnet und vorzugsweise ist der Wassereinlass im Boden und der Wasserauslass im Deckel angeordnet. Das Wasser kann so mit einem gewissen Druck, beispielsweise zwischen 1 und 10 bar, über den Wassereinlass im Boden der Vorrichtung zur Dotierung von Wasser mit Silberionen unten zugeführt werden, steigt dann im Ringspalt verteilt nach oben und tritt schliesslich über den Wasserauslass im Deckel wieder aus der Vorrichtung aus. Durch das versetzte Anordnen des Wassereinlasses und des Wasserauslasses ist sichergestellt, dass das Wasser im Ringspalt verteilt und nicht einfach gerade nach oben steigt. Dadurch, dass der Wassereinlass unten und der Wasserauslass oben ist, werden allfällig vorhandene Luftblasen durch das steigende Wasser selbst aus der Vorrichtung zur Dotierung von Wasser mit Silberionen entfernt.

Bei einer bevorzugten Ausführungsvariante ist im Boden unterhalb des Ringspalts eine Ringkammer angeordnet, in die der Wassereinlass mündet, und zwischen der Ringkammer und dem Ringspalt ist ein ringförmiger, rundum gleichmässiger, eine Verengung bildender Durchlass vorhanden. Beim Zuführen von Wasser über den Wassereinlass wird so zuerst die Ringkammer rundum gefüllt. Danach wird das Wasser aus der Ringkammer durch den ringförmigen Durchlass hindurch rundum gleichmässig in den Ringspalt gedrückt, was zu einem besser über den ganzen Ringspalt verteilten Ansteigen des Wassers führt.

Mit Vorteil ist im Deckel oberhalb des Ringspalts eine Ringkammer angeordnet, die mit dem Wasserauslass kommuniziert, und ist zwischen Ringkammer und Ringspalt ein ringförmiger, rundum gleichmässiger, eine Verengung bildender Durchlass vorhanden. Das im Ringspalt ansteigende Wasser wird so durch den ringförmigen Durchlass hindurch rundum gleichmässig in die Ringkammer gedrückt, was zu einem besser über den ganzen Ringspalt verteilten Ansteigen des Wassers führt.

Vorzugsweise sind natürlich sowohl im Boden als auch im Deckel je eine Ringkammer und zwischen Ringkammer und Ringspalt ein ringförmiger Durchlass angeordnet.

Bei einer vorteilhaften Ausführungsvariante sind der Boden und der Deckel miteinander verschraubt und das Aussenrohr und das Innenrohr in Ringnuten im Boden und im Deckel gehalten und zwischen dem Boden und dem Deckel eingeklemmt. Dies ermöglicht es, das Wasser mit einem gewissen Druck in die Vorrichtung zur Dotierung von Wasser mit Silberionen einzuführen, ohne dass diese auseinander bricht oder undicht wird.

Vorzugsweise sind im Innern des Innenrohrs Stützscheiben angeordnet. Mit Vorteil ist um das Aussenrohr herum ein Verstärkungsmantel, vorzugsweise aus Stahl, angeordnet. Dank dieser Verstärkungsmittel kann auch bei einem Innenrohr und/oder Aussenrohr aus Kunststoff Wasser mit einem hohem Betriebsdruck von über 10 bar in die Vorrichtung zur Dotierung von Wasser mit Silberionen eingeführt werden, ohne dass diese auseinander bricht. Es kann so ein Berstdruck von über 50 bar erreicht werden.

Vorteilhafterweise beträgt die Dicke des Ringspalts zwischen 1 mm und 4 mm, vorzugsweise zwischen 1,5 mm und 2,5 mm. Eine derartige Ringspaltdicke ermöglicht eine optimale Silberionenabscheidung in das aufsteigende Wasser. Bei einer grösseren Dicke müsste die Oberfläche der silberhaltigen Folien stark vergrössert werden, um das Wasser mit der gewünschten Konzentration von 0,1 mg Silberionen pro Liter Wasser zu versehen.

Mit Vorteil beträgt die Dicke der silberhaltigen Folien zwischen 0,1 mm und 0,3 mm, vorzugsweise zwischen 0,12 mm und 0,2 mm. Solche silberhaltigen Folien haben sich als ausreichend dick erwiesen, so dass während Monaten Silberionen in genügender Menge abgeschieden werden können.

Bevorzugt enthalten die silberhaltigen Folien mindestens 80% Silber. Vorzugsweise bestehen sie im Wesentlichen aus reinem Silber oder einer Silber-Kupfer-Legierung. Neben dem Silber hat auch Kupfer, dessen Anteil an der Legierung normalerweise zwischen 3% und 20% beträgt, eine antimikrobielle Wirkung. Die antimikrobielle Wirkung wird sogar verstärkt, wenn Kupfer- und Silberionen gleichzeitig in das Wasser abgeschieden werden.

Bei einer bevorzugten Ausführungsvariante erfolgt das Befestigen der silberhaltigen Folien auf die Innenseite des Aussenrohrs bzw. die Aussenseite des Innenrohrs durch Kleben.

Im Folgenden wird die erfindungsgemässe Vorrichtung zur Dotierung von Wasser mit Silberionen unter Bezugnahme auf die beigefügten Zeichnungen anhand eines Ausführungsbeispiels detaillierter beschrieben. Es zeigen schematisch:
- Fig. 1 -: eine Schnittansicht eines Ausführungsbeispiels der erfindungsgemässen Vorrichtung zur Dotierung von Wasser mit Silberionen gemäss der Linie A-A in Fig. 5;
- Fig. 2 -: eine Schnittansicht der Vorrichtung von Fig. 1 gemäss der Linie C-C in Fig. 5;
- Fig. 3 -: einen vergrösserten Ausschnitt aus Fig. 2, der den Bereich des Wassereinlasses zeigt;
- Fig. 4 -: eine Draufsicht auf einen Verteilring der Vorrichtung zur Dotierung von Wasser mit Silberionen, wie er im Boden und im Deckel angeordnet ist;
- Fig. 5 -: eine Ansicht von oben der Vorrichtung zur Dotierung von Wasser mit Silberionen; und
- Fig. 6 -: eine vergrösserte Detailansicht der Vorrichtung zur Dotierung von Wasser mit Silberionen, die den elektrischen Anschluss einer der silberhaltigen Folien zeigt, wobei der obere Teil der Figur eine Schnittansicht gemäss der Linie B-B in Fig. 5 ist, während der untere Teil der Figur einen zur Linie B-B senkrechten Schnitt zeigt.

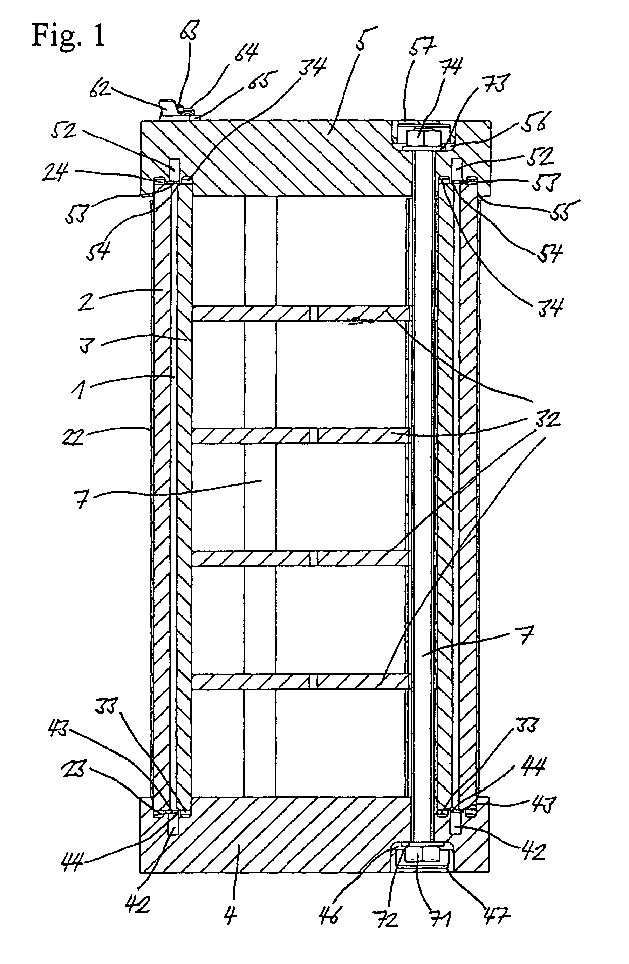

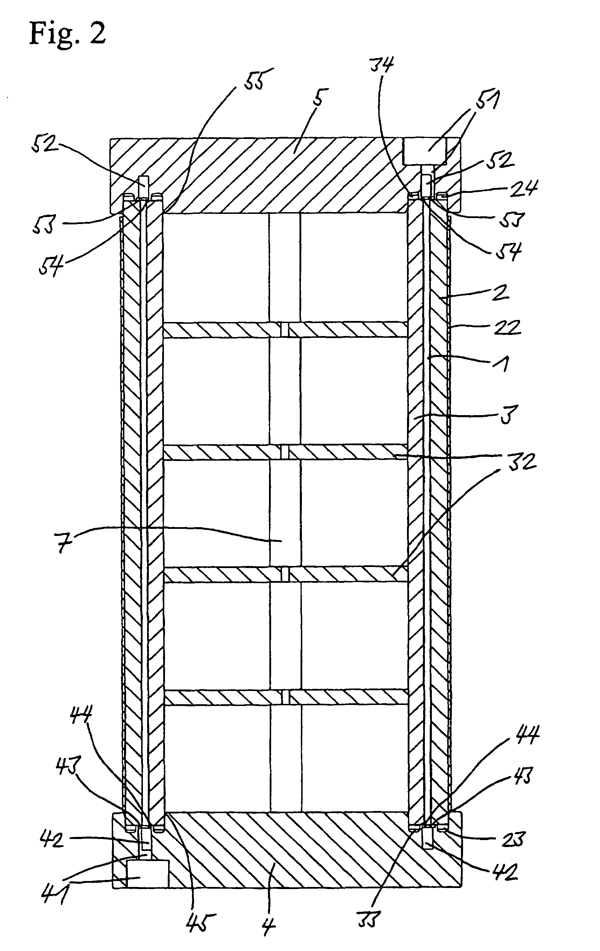

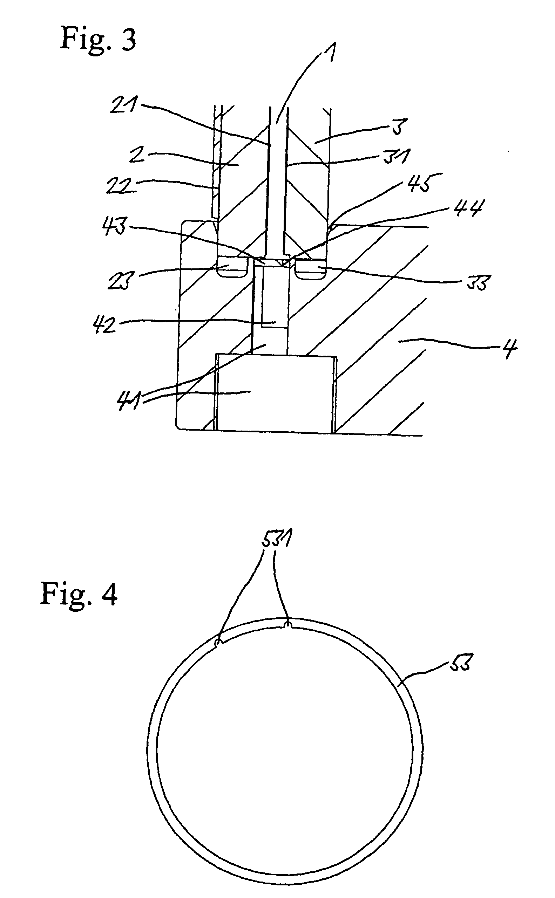

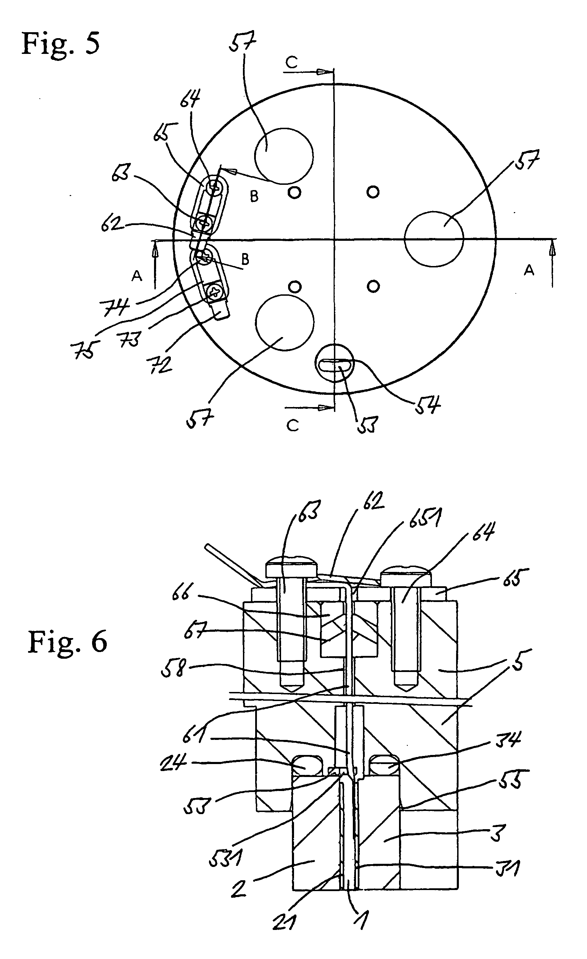

Wie insbesondere in den Fig. 1 und 2 ersichtlich, umfasst das dargestellte Ausführungsbeispiel einer erfindungsgemässen Vorrichtung zur Dotierung von Wasser mit Silberionen ein Aussenrohr 2 und ein Innenrohr 3, das konzentrisch innerhalb des Aussenrohrs 2 angeordnet ist, so dass zwischen Innenrohr 3 und Aussenrohr 2 ein gleichmässiger Ringspalt 1 vorhanden ist. Zu seiner Verstärkung gegen einen nach innen gerichteten Druck ist das Innenrohr 3 mit Stützscheiben 32 versehen, die im Rohrinneren regelmässig voneinander beabstandet angeordnet sind. Das Aussenrohr 2 ist durch einen um es herum angeordneten Verstärkungsmantel 22, der vorzugsweise aus Stahl ist, gegen einen nach aussen gerichteten Druck verstärkt. In den vergrösserten Darstellungen der Fig. 3 und 6 ist erkennbar, dass auf die dem Ringspalt 1 zugewandte Innenseite des Aussenrohrs 2 eine silberhaltige Folie 21 und auf die dem Ringspalt 1 zugewandte Aussenseite des Innenrohrs 3 eine silberhaltige Folie 31 geklebt ist. Die Dicke der silberhaltigen Folien 21, 31 beträgt beim vorliegenden Ausführungsbeispiel etwa 0,15 mm. Sie sind daher zu dünn, um in den Fig. 1 und 2 erkennbar zu sein, und in den Fig. 3 und 6 im Vergleich zum Aussenrohr 2 und Innenrohr 3 aus Darstellungsgründen zu dick gezeichnet.

An dem einen ihrer Rohrenden sind das Aussenrohr 2 und das Innenrohr 3, die die gleiche Länge aufweisen, durch einen Boden 4 abgeschlossen, während sie an dem anderen ihrer Rohrenden durch einen Deckel 5 abgeschlossen sind. Zu diesem Zweck sind das Aussenrohr 2 und das Innenrohr 3 in einer Ringnute 45 im Boden 4 und in einer Ringnute 55 im Deckel 5 gehalten. O-Ringdichtungen 23 und 33 zwischen dem Boden der Ringnute 45 und dem Aussenrohr 2 bzw. Innenrohr 3 gewährleisten einen wasserdichten Abschluss des Aussenrohrs 2 und des Innenrohrs 3 durch den Boden 4, während O-Ringdichtungen 24 und 34 zwischen dem Boden der Ringnute 55 und dem Aussenrohr 2 bzw. Innenrohr 3 einen wasserdichten Abschluss des Aussenrohrs 2 und des Innenrohrs 3 durch den Deckel 5 gewährleisten.

Der Boden 4 und der Deckel 5 sind durch drei gleichmässig verteilte Schrauben 7 miteinander verschraubt, so dass das Aussenrohr 2 und das Innenrohr 3 zwischen dem Boden 4 und dem Deckel 5 eingeklemmt sind. Die Schrauben 7 weisen jeweils einen Schraubenkopf 71 auf, der, auf einer Unterlagsscheibe 72 aufliegend, in einem Schraubenloch 46 im Boden 4 versenkt ist. Die Schraubenlöcher 46 sind durch Pfropfen 47 verschlossen. Deckelseitig ist auf jede der Schrauben 7 jeweils eine Schraubenmutter 74 geschraubt, wobei die Schraubenmuttern 74 jeweils, auf einer Unterlagsscheibe 73 aufliegend, in einem Schraubenloch 56 im Deckel 5 versenkt sind. Die Schraubenlöcher 56 sind durch Pfropfen 57 verschlossen.

Zur Wasserzuführung in den Ringspalt 1 ist der Boden 4 mit einem Wassereinlass 41 versehen, der in eine Ringkammer 42 mündet, wie am besten in Fig. 3 ersichtlich. Zwischen der Ringkammer 42 und dem Ringspalt 1 ist im Boden 4 ein Verteilring 43 so angeordnet, dass zwischen Ringkammer 42 und Ringspalt 1 ein ringförmiger, rundum gleichmässiger, eine Verengung bildender Durchlass 44 vorhanden ist. Beim Zuführen von Wasser über den Wassereinlass 41 wird so zuerst die Ringkammer 42 rundum gefüllt und danach das Wasser aus der Ringkammer 42 durch den ringförmigen Durchlass 44 hindurch rundum gleichmässig in den Ringspalt 1 gedrückt.

Die Wasserabführung erfolgt über einen Wasserauslass 51 im Deckel 5. Der Wasserauslass 51 kommuniziert mit einer Ringkammer 52, die oberhalb des Ringspalts 1 im Deckel 5 angeordnet ist. Zwischen der Ringkammer 52 und dem Ringspalt 1 ist im Deckel 5 ein Verteilring 53 so angeordnet, dass zwischen Ringkammer 52 und Ringspalt 1 ein ringförmiger, rundum gleichmässiger, eine Verengung bildender Durchlass 54 vorhanden ist. Das im Ringspalt 1 ansteigende Wasser wird so durch den ringförmigen Durchlass 54 hindurch rundum gleichmässig in die Ringkammer 52 gedrückt.

Der Verteilring 53 weist, wie in den Fig. 4 und 6 ersichtlich, an seiner Innenseite zwei Aussparungen 531 auf, die es ermöglichen, zwei Drähte zum Anschliessen der silberhaltigen Folien 21, 31 an eine Stromquelle in den Ringspalt 1 einzuführen, die aus demselben Material wie die silberhaltigen Folien 21, 31 sind. Der eine Draht 61 ist, wie in Fig. 6 dargestellt, durch Punktschweissung mit der silberhaltigen Folie 31 auf dem Innenrohr 3 verbunden, während der andere Draht (nicht sichtbar) durch Punktschweissung mit der silberhaltigen Folie 21 auf dem Aussenrohr 2 verbunden ist.

Der Draht 61 ist durch ein Loch 58 im Deckel 5 und ein Loch 651 in einem auf dem Deckel 5 aufliegenden Stahlplättchen 65 nach aussen gezogen, wo er zwischen einer Anschlussklemme 62 und dem Stahlplättchen 65 festgeklemmt ist, wobei hierzu die Anschlussklemme 62 und das Stahlplättchen 65 durch zwei Schrauben 63, 64 an den Deckel 5 geschraubt sind. Durch das Anschrauben des Stahlplättchens 65 drückt dieses ausserdem ein Druckteil 66 in das im oberen Teil erweiterte Loch 58 im Deckel 5. Hierdurch wird eine im erweiterten Bereich des Lochs 58 unterhalb des Druckteils 66 angeordnete Gummidichtung 67 zusammen- und dadurch gegen den Draht 61 gedrückt, was zu einem dichten Anliegen am Draht 61 führt. Das Loch 58 mit dem durchgeführten Draht 61 wird so dicht verschlossen.

Der nicht sichtbare, mit der silberhaltigen Folie 21 verbundene Draht ist entsprechend zwischen einer Anschlussklemme 72 und einem Stahlplättchen 75 festgeklemmt, wobei hierzu die Anschlussklemme 72 und das Stahlplättchen 75 durch zwei Schrauben 73, 74 an den Deckel 5 geschraubt sind. Auch das Stahlplättchen 75 drückt ein Druckteil in ein im oberen Teil erweitertes Loch im Deckel 5, durch das der Draht durchgeführt ist. Hierdurch wird ebenfalls eine im erweiterten Bereich des Lochs unterhalb des Druckteils angeordnete Gummidichtung zusammen- und gegen den Draht gedrückt, was zu einem dichten Anliegen am Draht führt, so dass das Loch dicht verschlossen wird.

An den Anschlussklemmen 62, 72 wird eine steuerbare Stromquelle angeschlossen. Sie wird unter anderem in Abhängigkeit von der durch den Ringspalt 1 fliessenden Wassermenge und der Leitfähigkeit des Wassers so gesteuert, dass von den silberhaltigen Folien 21, 31 0,1 mg Silberionen pro Liter Wasser abgeschieden werden, wobei die abgeschiedene Silberionenmenge über die Faradayschen Gesetze mit dem Stromfluss zusammenhängt. Die Silberionenabscheidungsrate hängt natürlich auch von der Fläche der silberhaltigen Folien 21, 31, der an den Elektroden anliegenden Spannung und der Dicke des Ringspalts 1 ab. Die silberhaltigen Folien 21, 31 können einen mehr oder weniger grossen Teil der Innenseite des Aussenrohrs 2 bzw. der Aussenseite des Innenrohrs 3 abdecken, wobei für eine möglichst grosse Abscheidungsrate die Abdeckung möglichst vollständig ist. Die Fläche der silberhaltigen Folien 21, 31 beträgt beim vorliegenden Ausführungsbeispiel etwa 10 dm².

Die silberhaltigen Folien 21, 31 sowie der Draht 61 und der nicht sichtbare Draht zum Anschliessen der silberhaltigen Folien 21, 31 an eine Stromquelle sind beim vorliegenden Ausführungsbeispiel aus reinem Silber, denkbar wäre aber auch eine Silber-Kupfer-Legierung mit vorzugsweise mindestens 80% Silber-Anteil.

Das Aussenrohr 2, das Innenrohr 3, der Boden 4 und der Deckel 5 sind hier aus Kunststoff, welcher leicht und kostengünstig ist. Durch die Stützscheiben 32 und den Verstärkungsmantel 22 kann das Wasser in der Vorrichtung zur Dotierung von Wasser mit Silberionen problemlos einen Betriebsdruck von 10 bar haben, wobei der Berstdruck über 50 bar ist. Das dargestellte Ausführungsbeispiel der erfindungsgemässen Vorrichtung zur Dotierung von Wasser mit Silberionen ist mit Wasserdurchflussraten von 20 1/h bis 500 1/h betreibbar.

Zu der vorbeschriebenen erfindungsgemässen Vorrichtung zur Dotierung von Wasser mit Silberionen sind weitere Variationen realisierbar. Hier ausdrücklich erwähnt seien noch:
- Sowohl der Wassereinlass als auch der Wasserauslass können im Deckel angeordnet sein, wobei dann vorzugsweise das Wasser nach dem Wassereinlass zunächst in den Boden geleitet wird und danach vom Boden aus in den Ringspalt eingespiesen wird.
- Anstelle der Verteilringe 43 und 53 mit den ringförmigen Durchlässen 44 und 54 können auch Trennringe verwendet werden, die eine Vielzahl kleiner Löcher aufweisen, die für eine gleichmässige Wasserverteilung sorgen.

## Patentansprüche

1. Vorrichtung zur Dotierung von Wasser mit Silberionen, umfassend ein Aussenrohr (2), ein Innenrohr (3), das so innerhalb des Aussenrohrs (2) angeordnet ist, dass zwischen Innenrohr (3) und Aussenrohr (2) ein Ringspalt (1) vorhanden ist, wobei auf der dem Ringspalt (1) zugewandten Innenseite des Aussenrohrs (2) und auf der dem Ringspalt (1) zugewandten Aussenseite des Innenrohrs (3) jeweils eine silberhaltige Schicht angeordnet ist, und Anschlussmittel (61, 62, 72) zum Anschliessen der beiden silberhaltigen Schichten an eine elektrische Stromquelle, **dadurch gekennzeichnet, dass** die beiden silberhaltigen Schichten jeweils aus einer Folie (21, 31) bestehen, die auf die Innenseite des Aussenrohrs (2) bzw. die Aussenseite des Innenrohrs (3) befestigt ist.

2. Vorrichtung nach Anspruch 1, **dadurch gekennzeichnet, dass** sie einen Boden (4) umfasst, der das Aussenrohr (2) und das Innenrohr (3) an dem einen ihrer Rohrenden abschliesst, sowie einen Deckel (5), der das Aussenrohr (2) und das Innenrohr (3) an dem anderen ihrer Rohrenden abschliesst, wobei im Deckel (5) und/oder im Boden (4) ein Wassereinlass (41) und ein Wasserauslass (51) angeordnet sind, so dass Wasser über den Wassereinlass (41) in den Ringspalt (1) einführbar und über den Wasserauslass (51) wieder aus dem Ringspalt (1) abführbar ist.

3. Vorrichtung nach Anspruch 2, **dadurch gekennzeichnet, dass** der Wassereinlass (41) und der Wasserauslass (51) bezogen auf den Ringspalt (1) um 180° zueinander versetzt angeordnet sind und vorzugsweise der Wassereinlass (41) im Boden (4) und der Wasserauslass (51) im Deckel (5) angeordnet ist.

4. Vorrichtung nach Anspruch 2 oder 3, **dadurch gekennzeichnet, dass** im Boden (4) unterhalb des Ringspalts (1) eine Ringkammer (42) angeordnet ist, in die der Wassereinlass (41) mündet, und zwischen Ringkammer (42) und Ringspalt (1) ein ringförmiger, rundum gleichmässiger, eine Verengung bildender Durchlass (44) vorhanden ist.

5. Vorrichtung nach einem der Ansprüche 2 bis 4, **dadurch gekennzeichnet, dass** im Deckel (5) oberhalb des Ringspalts (1) eine Ringkammer (52) angeordnet ist, die mit dem Wasserauslass (51) kommuniziert, und zwischen Ringkammer (52) und Ringspalt (1) ein ringförmiger, rundum gleichmässiger, eine Verengung bildender Durchlass (54) vorhanden ist.

6. Vorrichtung nach einem der Ansprüche 2 bis 5, **dadurch gekennzeichnet, dass** der Boden (4) und der Deckel (5) miteinander verschraubt sind und das Aussenrohr (2) und das Innenrohr (3) in Ringnuten (45, 55) im Boden (4) und im Deckel (5) gehalten und zwischen dem Boden (4) und dem Deckel (5) eingeklemmt sind.

7. Vorrichtung nach einem der Ansprüche 1 bis 6, **dadurch gekennzeichnet, dass** im Innern des Innenrohrs (3) Stützscheiben (32) und vorzugsweise um das Aussenrohr (2) herum ein Verstärkungsmantel (22), vorzugsweise aus Stahl, angeordnet sind.

8. Vorrichtung nach einem der Ansprüche 1 bis 7, **dadurch gekennzeichnet, dass** die Dicke des Ringspalts (1) zwischen 1 mm und 4 mm, vorzugsweise zwischen 1,5 mm und 2,5 mm beträgt.

9. Vorrichtung nach einem der Ansprüche 1 bis 8, **dadurch gekennzeichnet, dass** die Dicke der silberhaltigen Folien (21, 31) zwischen 0,1 mm und 0,3 mm, vorzugsweise zwischen 0,12 mm und 0,2 mm beträgt.

10. Vorrichtung nach einem der Ansprüche 1 bis 9, **dadurch gekennzeichnet, dass** die silberhaltigen Folien (21, 31) mindestens 80% Silber enthalten und vorzugsweise im Wesentlichen aus reinem Silber oder einer Silber-Kupfer-Legierung bestehen.

11. Vorrichtung nach einem der Ansprüche 1 bis 10, **dadurch gekennzeichnet, dass** die silberhaltigen Folien (21, 31) auf die Innenseite des Aussenrohrs (2) bzw. die Aussenseite des Innenrohrs (3) geklebt sind.

## Claims

1. Apparatus for doping water with silver ions, comprising an outer tube (2), an inner tube (3), which is arranged inside the outer tube (2) such that an annular gap (1) is present between the inner tube (3) and outer tube (2), while on the inside of the outer tube (2) facing the annular gap (1) and on the outside of the inner tube (3) facing the annular gap (1) is provided, in each case, a silver-containing layer, and connecting means (61, 62, 72) for connecting the two silver-containing layers to an electrical current source, **characterised in that** the two silver-containing layers each consist of a foil (21, 31) which is attached to the inside of the outer tube (2) or to the outside of the inner tube (3).

2. Apparatus according to claim 1, **characterised in that** it comprises a base (4) which closes off the outer tube (2) and the inner tube (3) at one of their ends, as well as a lid (5) which closes off the outer tube (2) and the inner tube (3) at the other one of their ends, a water inlet (41) and a water outlet (51) being provided in the lid (5) and/or in the base (4), so that water can be introduced into the annular gap (1) through the water inlet (41) and can be removed again from the annular gap (1) through the water outlet (51).

3. Apparatus according to claim 2, **characterised in that** the water inlet (41) and the water outlet (51) are offset from one another by 180°, relative to the annular gap (1), and preferably the water inlet (41) is provided in the base (4) and the water outlet (51) is provided in the lid (5).

4. Apparatus according to claim 2 or 3, **characterised in that** in the base (4) underneath the annular gap (1) is provided an annular chamber (42) into which the water inlet (41) opens, and between the annular chamber (42) and annular gap (1) is an annular opening (44) which is circumferentially uniform, forming a constriction.

5. Apparatus according to one of claims 2 to 4, **characterised in that** in the lid (5) above the annular gap (1) is provided an annular chamber (52) which communicates with the water outlet (51), and between the annular chamber (52) and annular gap (1) is an annular opening (54) which is circumferentially uniform, forming a constriction.

6. Apparatus according to one of claims 2 to 5, **characterised in that** the base (4) and the lid (5) are screwed together and the outer tube (2) and the inner tube (3) are held in annular grooves (45, 55) in the base (4) and in the lid (5) and are clamped between the base (4) and the lid (5).

7. Apparatus according to one of claims 1 to 6, **characterised in that** support discs (32) are arranged inside the inner tube (3) and a reinforcing jacket (22), preferably made of steel, is preferably arranged around the outer tube (2).

8. Apparatus according to one of claims 1 to 7, **characterised in that** the thickness of the annular gap (1) is between 1 mm and 4 mm, preferably between 1.5 mm and 2.5 mm.

9. Apparatus according to one of claims 1 to 8, **characterised in that** the thickness of the silver-containing foils (21, 31) is between 0.1 mm and 0.3 mm, preferably between 0.12 mm and 0.2 mm.

10. Apparatus according to one of claims 1 to 9, **characterised in that** the silver-containing foils (21, 31) contain at least 80% silver and preferably consist essentially of pure silver or a silver-copper alloy.

11. Apparatus according to one of claims 1 to 10, **characterised in that** the silver-containing foils (21, 31) are adhesively bonded to the inside of the outer tube (2) and to the outside of the inner tube (3), respectively.

## Revendications

1. Dispositif pour le dopage de l'eau avec des ions argent, comprenant un tube externe (2) et un tube interne (3), qui est disposé dans le tube externe (2), de sorte qu'entre le tube interne (3) et le tube externe (2) une fente annulaire (1) est présente, où sur la face interne du tube externe (2), orientée vers la fente annulaire (1) et sur la face externe du tube interne (3), orientée vers la fente annulaire (1), est disposée chaque fois une couche contenant de l'argent, et des moyens de raccordement (61, 62, 72) pour raccorder les deux couches contenant de l'argent à une source de courant électrique, **caractérisé en ce que** les deux couches contenant de l'argent consistent chaque fois en une feuille (21, 31), qui est fixée sur la face interne du tube externe (2) et sur la face externe du tube interne (3).

2. Dispositif selon la revendication 1, **caractérisé en ce qu'**il comprend un fond (4), qui ferme le tube externe (2) et le tube interne (3) sur l'une de leurs extrémités, ainsi qu'un couvercle (5), qui ferme le tube externe (2) et le tube interne (3) sur l'autre de leurs extrémités, où dans le couvercle (5) et/ou dans le fond (4) sont disposées une entrée d'eau (41) et une sortie d'eau (51), de sorte que l'eau peut être introduite par l'entrée d'eau (41) dans la fente annulaire (1) et extraite par la sortie d'eau (51) de la fente annulaire (1).

3. Dispositif selon la revendication 2, **caractérisé en ce que** l'entrée d'eau (41) et la sortie d'eau (51) sont disposées à 180° l'une par rapport à l'autre par rapport à la fente annulaire (1) et de préférence, l'entrée d'eau (41) est disposée dans le fond (4) et la sortie d'eau (51) dans le couvercle (5).

4. Dispositif selon la revendication 2 ou 3, **caractérisé en ce qu'**une chambre annulaire (42) est disposée dans le fond (4), sous la fente annulaire (1), dans laquelle l'entrée d'eau (41) débouche et qu'entre la chambre annulaire (42) et la fente annulaire (1) est présent un passage (44) en forme d'anneau, uniforme, formant un étranglement.

5. Dispositif selon l'une quelconque des revendications 2 à 4, **caractérisé en ce qu'**une chambre annulaire (52) est disposée dans le couvercle (5), au-dessus de la fente annulaire (1), qui communique avec la sortie d'eau (51) et qu'entre la chambre annulaire (52) et la fente annulaire (1) est présent un passage (54) en forme d'anneau, uniforme, formant un étranglement.

6. Dispositif selon l'une quelconque des revendications 2 à 5, **caractérisé en ce que** le fond (4) et le couvercle (5) sont vissés l'un avec l'autre et le tube externe (2) et le tube interne (3) sont maintenus dans des rainures annulaires (45, 55) dans le fond (4) et dans le couvercle (5) et pincés entre le fond (4) et le couvercle (5).

7. Dispositif selon l'une quelconque des revendications 1 à 6, **caractérisé en ce qu'**à l'intérieur du tube interne (3) sont disposées des rondelles d'appui (32) et de préférence, on dispose autour du tube externe (2) un manteau de renforcement (22), de préférence en acier.

8. Dispositif selon l'une quelconque des revendications 1 à 7, **caractérisé en ce que** l'épaisseur de la fente annulaire (1) se situe dans l'intervalle allant de 1 mm à 4 mm, de préférence de 1,5 mm à 2,5 mm.

9. Dispositif selon l'une quelconque des revendications 1 à 8, **caractérisé en ce que** l'épaisseur des feuilles contenant de l'argent (21, 31) se situe dans l'intervalle allant de 0,1 mm à 0,3 mm, de préférence de 0,12 mm à 0,2 mm.

10. Dispositif selon l'une quelconque des revendications 1 à 9, **caractérisé en ce que** les feuilles contenant de l'argent (21, 31) contiennent au moins 80% d'argent et de préférence, consistent essentiellement en argent pur ou en un alliage argent-cuivre.

11. Dispositif selon l'une quelconque des revendications 1 à 10, **caractérisé en ce que** les feuilles contenant de l'argent (21, 31) sont collées sur la face interne du tube externe (2) ou la face externe du tube interne (3).
